# EUROPÄISCHE PATENTSCHRIFT

(11) **EP 1 503 843 B1**
(45) Veröffentlichungstag und Bekanntmachung des Hinweises auf die Patenterteilung: **18.07.2007**
(21) Anmeldenummer: 03752656.3
(22) Anmeldetag: 12.03.2003
(51) Int. Cl.: B01D 46/52, B01D 46/10, B01D 33/41

(54) **FILTERANLAGE**
FILTER SYSTEM
INSTALLATION DE FILTRATION

(30) Priorität: 15.05.2002 DE 10221779
(43) Veröffentlichungstag der Anmeldung: 09.02.2005
(73) Patentinhaber: Carl Freudenberg KG, 69469 Weinheim (DE)
(72) Erfinder: CAESAR, Thomas, 69181 Leimen (DE); TAPPER, Renate, 64625 Bensheim (DE); SCHROTH, Thomas, 67240 Bobenheim (DE)
(86) Internationale Anmeldenummer: PCT/EP2003/002499
(87) Internationale Veröffentlichungsnummer: WO 2003/097214

(56) Entgegenhaltungen:
- EP-A- 0 663 228
- GB-A- 2 336 990
- US-B1- 6 348 077

## Beschreibung

### Technisches Gebiet

Mehr und mehr sind bei Betrieben Reinlufträume erforderlich, in denen Präzisionsgeräte beziehungsweise dazu benötigte Teile hergestellt werden. Auch die Anforderungen an die Reinheit der Zu- und Umluft industrieller Prozesse nehmen stetig zu. Eine von Staub und Mikroorganismen gereinigte Luft ist erforderlich und es werden unterschiedlich aufgebaute Luftfilteranlagen verwendet. Hierbei werden häufig Kassettenfilter eingesetzt, welche ein senkrecht zur Strömungsrichtung ausgerichtetes Faltenpaket oder mehrere v-förmig angeordnete Faltenpakete haben, die in einen Rahmen eingefügt sind. Faltenpaket und Rahmen werden gegeneinander über ein Dichtmaterial abgedichtet. Als Faltenpaket wird ein aus zick-zack-förmig gefaltetem Filterpapier gebildeter Einsatz verwendet. Als Dichtmaterial kann bei Feinfiltem ein Filtervlies eingelegt werden. Bei Schwebstofffiltern werden jedoch meist flüssig zu verarbeitende Kunststoffe eingesetzt.

Der Rahmen gibt dem Filter die erforderliche Stabilität, schützt das Faltenpaket vor Beschädigungen und ermöglicht den Einbau des Filters in ein dafür vorgesehenes Aufnahmesystem. Der fertige Filter mit Rahmen wird vor Ort in eine Aufnahmevorrichtung einer Luftfilteranlage eingebaut. Die Luftfilteranlagen sind häufig mehrstufig aufgebaut und bestehen aus in Reihe geschalteten Filtern, meist unterschiedlicher Filterklasse, wobei die Abscheideleistung der Filter in der Regel in Luftstromrichtung zunimmt. Wenn die Filter einer jeden Stufe in einer Filteranlage, jeweils in eine eigene Aufnahmevorrichtung separat eingebaut werden, muss die Filteranlage entsprechend groß ausgelegt sein. Dieses hat höhere Investitionskosten gegenüber einer einstufigen Anlage zur Folge. Aus diesem Grunde auch wird möglichst eine kompakte Bauweise der zwei- oder mehrstufigen Filteranlagen angestrebt. In der Praxis wurde bei einer zweistufigen Filteranordnung der Vorfilter und der Hauptfilter zusammen in nur eine Filteraufnahme eingebaut. Der Vorfilter wurde lose an den Hauptfilter angelegt und beide Elemente nach dem Einbau in die Filteraufnahme durch letztere festgehalten. Die Abdichtung zwischen Vor- und Hauptfilter wurde durch eine umlaufende Dichtung erreicht, die auf die beiden Filter aufgebracht wurde. Da die Standzeit des Vorfilters in der Regel kürzer ist als die des Hauptfilters, ergeben sich bei einer Auswechslung des Vorfilters Probleme. Diese werden bei Filteranlagen, die nur von einer Seite zugänglich sind noch verstärkt, da der Vor- und der Hauptfilter nur von ein und derselben Seite in die Aufnahme der Vorrichtung eingebaut werden können.

### Darstellung der Erfindung

Der Erfindung liegt deshalb die Aufgabe zu Grunde eine Filteranlage zu schaffen, die nur geringen Bauraum benötigt, sehr kompakt in ihrer Ausgestaltung ist und eine leichte Montage beziehungsweise Demontage einzelner Filter ermöglicht.

Die Lösung der gestellten Aufgabe erfolgt bei einer Filteranlage mit mehreren hintereinander geschalteten Filtern aus Filtermaterial, das von Rahmen erfaßt ist, insbesondere mit einem Hauptfilter und mindestens einem Vorfilter erfindungsgemäß dadurch, dass der Rahmen des Hauptfilters und der Rahmen des Vorfilters beziehungsweise die Rahmen der Vorfilter auf ihren einander zugewandten Seiten mit Verbindungselementen versehen sind, die eine formschlüssige Aneinanderkopplung der einzelnen Filter zulassen. Nach der Erfindung kann also beispielsweise eine Filterkassette als Vorfilter auf einen kassettenförmigen Hauptfilter aufgesetzt werden und die beiden Filter miteinander befestigt werden. Die aneinandergekoppelten Filter bilden in sich eine stabile Baueinheit. Das hat zur Folge, dass lediglich der Hauptfilter in der Filteraufnahmevorrichtung zu befestigen ist. Eine gesonderte Befestigung des Vofilters entfällt.

Die Verbindungselemente können auswechselbar an den Filterrahmen angefügt sein. Sie sind bevorzugt symmetrisch zu ihre Mittelebene ausgebildet. Hier können beispielsweise doppelseitige Spreizdübel, zweiteilige Kupplungsstücke oder dergleichen zum Einsatz gelangen, die in entsprechende Nuten, Löcher oder dergleichen in den Rahmen der Filter eingefügt werden. Bevorzugt werden Verbindungselemente benutzt, die wieder gelöst werden können, ohne dass dabei der Hauptfilter beschädigt wird. Die Verbindungselemente selbst können dabei teilweise oder auch ganz erneuert werden. Besonders vorteilhaft ist eine Lösung, bei der die Verbindungselemente zweigeteilt sind und ineinander gesteckt werden können.

Die Erfindung ist besonders günstig bei kassettenförmigen Filtern sogenannten Filterkassetten einsetzbar.

### Ausführung der Erfindung

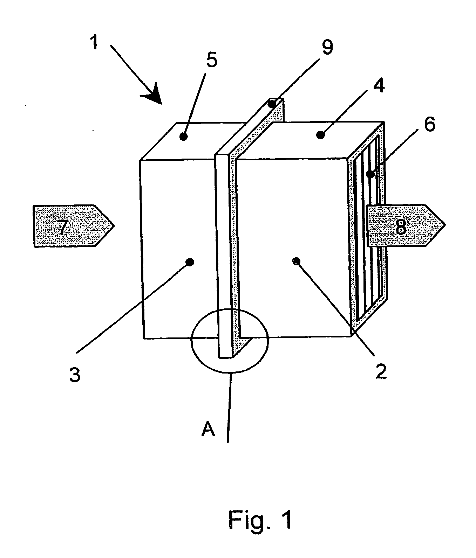

Anhand mehrere Ausführungsbeispiele wird die Erfindung nachstehend näher erläutert. In der beiliegenden Figur 1 ist ein Filtereinsatz 1 aus einem Hauptfilter 2 und einem Vorfilter 3 in der Schrägansicht gezeigt. Sowohl der Hauptfilter 2 als auch der Vorfilter 3 sind jeweils von einem Rahmen 4 und 5 umgeben. Als Filtermaterial werden zick-zack-förmig gefaltete Filterpakete 6 verwendet. Mit den Pfeilen 7 und 8 ist die Richtung der Luftströmung angezeigt. Am Hauptfilter 2 befindet sich der sogenannte Kopfrahmen 9, welcher zur Befestigung des Filtersatzes in einer Filteranlage dient.

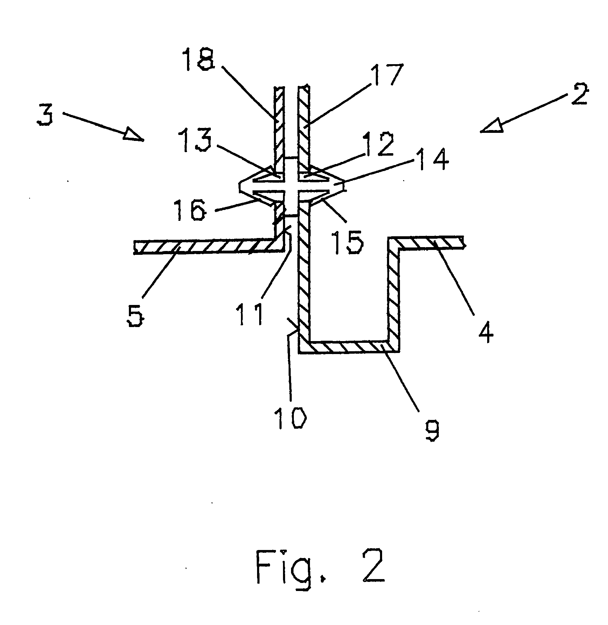

In der Figur 2 ist vergrößert und im Schnitt der Ausschnitt A aus Figur 1 gezeigt. Die aneinanderanliegenden Seiten 10 und 11 des Hauptfilters 2 und des Vorfilters 3 sind mit den Löchern 12 und 13 versehen, in die das Verbindungselement 14 formschlüssig eingesetzt ist. Im vorliegendem Beispiel besteht das Verbindungselement 14 aus einem doppelseitigen Spreizdübel, dessen Spreizarme 15 und 16 bei eingestecktem Dübel hinter die Wandungen 17 und 18 der Rahmen 4 und 5 greifen. Es wird angemerkt, dass auf dem Rahmenumfang bei beiden Filtern eine Vielzahl an Spreizdübeln 14 in entsprechende Öffnungen 12, 13 eingesetzt werden. Der Spreizdübel 14 ist in seiner axialen Mittelebene mit der Abstandsscheibe 19 versehen, durch welche auch eine exakte Zuordnung der Seitenflächen 10 und 11 zueinander hergestellt wird.

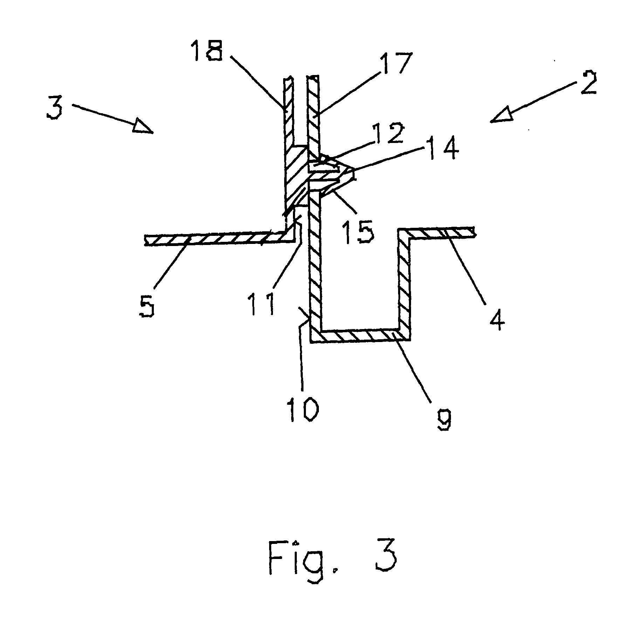

Die Figur 3 zeigt eine andere Ausbildung des Verbindungselements 14, das aus der Wand 18 des Rahmens 5 hervorsteht. Es ist mit der Wand 18 integriert und seine Spreizarme 15 werden durch das Loch 12 gesteckt und greifen hinter die Wand 17.

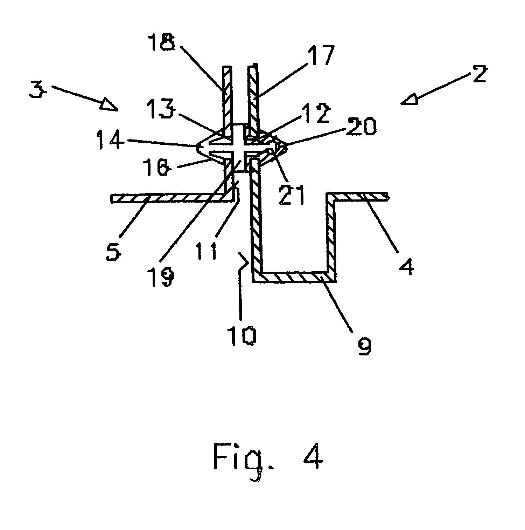

Die Figur 4 gibt eine besonders gute Lösung für die Verbindung der Rahmen 4 und 5 wieder, bei der in das Loch 13 des Rahmens 5 der Spreizdübel 19 gesteckt wird. Die auf seiner einen Seite vorhandenen Spreizarme 16 greifen hinter die Wandung 18 des Vorfilters 3. Seine gegenüberliegende Seite ist mit einem vorstehenden Stecker 21 versehen, der in eine Aufnahme in einem Halteteil 20 eingesteckt werden kann. Das Halteteil 20 besteht aus einem leicht elastischen Material und ist als Pfropfen in die Öffnung 12 der Wandung 17 des Hauptfilters 2 eingesetzt. Das Verbindungselement 14 ist damit druckknopfartig ausgebildet und die beiden Rahmen 4 und 5 sind leicht miteinander zu verbinden beziehungsweise wieder voneinander zu lösen ohne dass hierbei eine Beschädigung an den Rahmen oder den Verbindungselementen 14 auftritt.

## Patentansprüche

1. Filteranlage für Reinlufträume aus einem Kassettenfilter mit mehreren hintereinander geschalteten Filtern aus zick-zackförmig gefaltetem Filtermaterial, das von Rahmen erfaßt ist, insbesondere mit einem Hauptfilter und mindestens einem Vorfilter, **dadurch gekennzeichnet, dass** der Rahmen (4) des Hauptfilters (2) und der Rahmen (5) des Vorfilters (3) beziehungsweise die Rahmen (5) der Vorfilter (3) auf ihren einander zugewandten Seitenflächen (10, 11) mit Verbindungselementen (14) versehen sind, die eine formschlüssige und lösbare Aneinanderkopplung der einzelnen Filter (2, 3) zulassen.

2. Filteranlage nach Anspruch 1, **dadurch gekennzeichnet, dass** die aneinander gekoppelten Filter (2, 3) eine in sich stabile Baueinheit bilden.

3. Filteranlage nach einem der Ansprüche 1 oder 2, **dadurch gekennzeichnet, dass** die Verbindungselemente (14) auswechselbar an den Filterrahmen (4, 5) angefügt sind beziehungsweise darin einfügbar sind.

4. Filteranlage nach einem der Ansprüche 1 bis 3, **dadurch gekennzeichnet, dass** die Verbindungselemente (14) zweiteilig ineinander steckbar ausgeführt sind.

5. Filteranlage nach einem der Ansprüche 1 bis 4, **dadurch gekennzeichnet, dass** die Verbindungselemente (14) symmetrisch zu ihrer Mittelebene ausgebildet sind.

## Claims

1. Filter system for clean-air rooms, consisting of a cartridge filter with a plurality of filters connected in series and composed of zigzag-folded filter material surrounded by a frame, in particular with a main filter and with at least one prefilter, **characterized in that** the frame (4) of the main filter (2) and the frame (5) of the prefilter (3) or the frames (5) of the prefilters (3) are provided on their mutually confronting side faces (10, 11) with connection elements (14) which allow a positive and releasable coupling of the individual filters (2, 3) to one another.

2. Filter system according to Claim 1, **characterized in that** the filters (2, 3) coupled to one another form an intrinsically stable structural unit.

3. Filter system according to either one of Claims 1 and 2, **characterized in that** the connection elements (14) are exchangeably attached to or insertable in the filter frames (4, 5).

4. Filter system according to one of Claims 1 to 3, **characterized in that** the connection elements (14) are produced in two parts so as to be pluggable one into the other.

5. Filter system according to one of Claims 1 to 4, **characterized in that** the connection elements (14) are designed symmetrically with respect to their mid-plane.

## Revendications

1. Installation de filtration pour locaux à air propre, constituée d'un filtre à cassette qui présente plusieurs filtres raccordés les uns derrière les autres en matériau de filtration plié en forme de zigzag qui est entouré par un encadrement, et en particulier une installation dotée d'un filtre principal et d'au moins un pré-filtre, **caractérisée en ce que** l'encadrement (4) du filtre principal (2) et l'encadrement (5) du pré-filtre (3) ou les encadrements (5) des pré-filtres (3) sont dotés sur leurs surfaces latérales (10, 11) tournées l'une vers l'autre d'éléments de liaison (14) qui permettent d'accoupler les différents filtres (2, 3) l'un à l'autre en correspondance mécanique et de manière libérable.

2. Installation de filtration selon la revendication 1, **caractérisée en ce que** les filtres (2, 3) accouplés l'un à l'autre forment une entité intrinsèquement stable.

3. Installation de filtration selon l'une des revendications 1 ou 2, **caractérisée en ce que** les éléments de liaison (14) sont assemblés de manière remplaçable sur les encadrements (4, 5) de filtre ou peuvent y être insérés.

4. Installation de filtration selon l'une des revendications 1 à 3, **caractérisée en ce que** les éléments de liaison (14) sont réalisés en deux pièces enfichables l'une dans l'autre.

5. Installation de filtration selon l'une des revendications 1 à 4, **caractérisée en ce que** les éléments de liaison (14) sont symétriques par rapport à leur plan central.
